# EUROPEAN PATENT SPECIFICATION

(11) **EP 4 145 352 B1**
(45) Date of publication and mention of the grant of the patent: **26.08.2026**
(21) Application number: 22193693.3
(22) Date of filing: 02.09.2022
(51) Int. Cl.: G06N 3/0464, G06N 3/084, G06N 3/044, G06V 10/774, G06V 10/82, G06V 20/58

(54) **SYSTEMS AND METHODS FOR TRAINING AND USING MACHINE LEARNING MODELS AND ALGORITHMS**
SYSTEME UND VERFAHREN ZUM TRAINIEREN UND VERWENDEN VON MASCHINENLERNMODELLEN UND ALGORITHMEN
SYSTÈMES ET PROCÉDÉS DE FORMATION ET D'UTILISATION DE MODÈLES D'APPRENTISSAGE AUTOMATIQUE ET D'ALGORITHMES

(30) Priority: 02.09.2021 US 202117465398
(43) Date of publication of application: 08.03.2023
(73) Proprietor: Argo AI, LLC, Pittsburgh, PA 15222 (US)
(72) Inventor: Muehlenstaedt, Thomas, 80805 Müchen (DE); Frtunikj, Jelena, 80805 Munich (DE)
(74) Representative: Bonsmann, Joachim Bernhard

(56) References cited:
- US-A1- 2021 133 497
- DAS SOUMI ET AL: "Multi-criteria online frame-subset selection for autonomous vehicle videos", PATTERN RECOGNITION LETTERS., vol. 133, 1 May 2020 (2020-05-01), NL, pages 349 - 355, XP093010503, ISSN: 0167-8655, DOI: 10.1016/j.patrec.2020.03.031
- ANGELOS KATHAROPOULOS ET AL: "Not All Samples Are Created Equal: Deep Learning with Importance Sampling", ARXIV.ORG, CORNELL UNIVERSITY LIBRARY, 201 OLIN LIBRARY CORNELL UNIVERSITY ITHACA, NY 14853, 2 March 2018 (2018-03-02), XP080866400

## Description

### BACKGROUND

### Statement of the Technical Field

The present disclosure relates generally to machine learning systems. More particularly, the present disclosure relates to implementing systems and methods for training and/or using a machine learning model and algorithm, wherein said machine learning model is trained for image-based prediction of cuboids associated with a given object for object trajectory prediction, general scene understanding, platform trajectory generation, and/or collision avoidance operations of the mobile platform.

### Description of the Related Art

Modern day vehicles have at least one on-board computer and have internet/satellite connectivity. The software running on these on-board computers monitor and/or control operations of the vehicles. The vehicle also comprises cameras, radars and LiDAR sensors for detecting objects in proximity thereto. The cameras capture images of the scenes in proximity to the vehicles. The LiDAR detectors generate LiDAR datasets that measure the distance from the vehicle to the objects at a plurality of different times. These images and distance measurements can be used by machine learning models and/or algorithms for identifying objects, tracking movements of the object, making predictions as to the object's trajectory, and planning paths of travel for the vehicle based on the predicted objects trajectory.

DAS SOUMI ET AL, "Multi-criteria online frame-subset selection for autonomous vehicle videos", PATTERN RECOGNITION LETTERS., NL, (20200501), vol. 133, doi:10.1016/j.patrec.2020.03.031, ISSN 0167-8655, pages 349 - 355, discloses methods for decreasing computational effort in training neural networks in the field of pattern recognition, whereby the training is accomplished by using different subsets for every training iteration selected from a base training dataset. The subset selection is made based on uncertainty or distinctiveness criteria, but not considering the derivative vector of the training data.

ANGELOS KATHAROPOULOS ET AL, "Not All Samples Are Created Equal: Deep Learning with Importance Sampling", ARXIV.ORG, CORNELL UNIVERSITY LIBRARY, 201 OLIN LIBRARY CORNELL UNIVERSITY ITHACA, NY 14853, (20180302), discloses a deep learning algorithm with an importance sampling, using an optional upper gradient boundary for selecting the training data subsets.

### SUMMARY

The present disclosure concerns implementing a computer-implemented method for training and/or using a machine learning model or algorithm according to the features of claim 1. The method comprises: providing, e.g. via a computing device, a training data set comprising a collection of training examples each training example comprising data point(s) (e.g., pixel values from an image or values of other sensor data) wherein the data point(s) are obtained from an image generated by a camera or a Lidar system, and a true value for at least one cuboid to be predicted by the machine learning model/algorithm; selecting, e.g. via the computing device, a first subset of training examples from the collection of training examples based on at least a derivative vector of a loss function for each training example of the collection of training examples, whereby the selection comprises an inclusion in the first subset of selected training examples based on a ranking of the training examples, said ranking in accordance with the norms of their derivative vectors with higher rankings for larger derivative norms; training, e.g. via the computing device, the machine learning model/algorithm using the first subset of training examples; and/or using the machine learning model/algorithm which has been trained to control operations of a mobile platform (e.g., an autonomous vehicle, articulating arm or other robotic device). A total number of training examples in the first subset of training examples is unequal to a total number of training examples in the collection of training examples. In this way, a portion of the training examples in the training data set are used to train the machine learning model/algorithm. It shall be appreciated that the training data set may be provided in any suitable manner, for example, it may be sent to the computing device and/or it may be requested or obtained by the computing device. Any of the operations may either be performed directly by the computing device, or at least some of them may be allocated to other computing devices, e.g., by the computing device.

In some scenarios, the first subset of training examples is selected based on norms of derivative vectors of the loss function. Each derivative vector is determined for a respective training example of the collection of training examples contained in the training data set. The training examples are ranked in accordance with the norms of the derivative vectors of the loss function associated therewith. A given number of training examples with the best rankings are selected for inclusion in the first subset of training examples. All other training examples of the training data set are excluded from the first subset of training examples.

In those or other scenarios, the methods also comprise: selecting, e.g. via the computing device, a second subset of training examples based on at least one of a derivative vector of the loss function for each training example of the collection of training examples and an importance of each training example relative to the other training examples. The first subset of training examples is used in a first epoch of the training process and the second subset of data points is used in a second epoch of the training process. A total number of training examples in the second subset is different than (e.g., greater than) the total number of training examples in the first subset.

The system aspects of the present teachings may each comprise means for performing the computer-implemented method. Implementing systems of the above-described methods for image-based perception and can include, but are not limited to, a processor and optionally a non-transitory computer-readable storage medium comprising programming instructions that cause the processor to implement a method for training and/or using a machine learning model or algorithm. The system may comprise a processor configured to perform the steps of a method for training a machine learning model by providing a training data set comprising a collection of training examples, each training example comprising at least one data point; selecting a first subset of training examples from the collection of training examples based on at least one of a derivative vector of a loss function for each training examples in the collection of training examples and an importance of each training examples of the collection of training examples relative to other training examples of the collection of training examples; and training the machine learning model using the first subset of training examples; wherein a total number of training examples in the first subset is unequal to a total number of training examples in the collection of training examples. The training data set may be provided by receiving it from a data source and/or another processor or by obtaining it from there.

Implementing aspects of the methods described herein may comprise a computer program product, or a computer readable storage medium comprising the computer program, comprising programming instructions that cause a processor to: provide or obtain a training data set comprising a collection of training examples, each training example comprising at least one data point; select a first subset of training examples from the collection of training examples based on at least one of a derivative vector of a loss function for each training example in the collection of training examples and an importance of each training examples relative to other training examples of the collection of training examples; and train the machine learning model using the first subset of training examples; wherein a total number of training examples in the first subset is unequal to a total number of training examples in the collection of training examples.

The present disclosure is also concerned with a trained machine learning model, and a data storage medium storing the model, as generated in any one of the methods described herein. Likewise, the use of the trained machine learning model for operating a vehicle, in particular a mobile platform, is also anticipated.

### BRIEF DESCRIPTION OF THE DRAWINGS

The present solution will be described with reference to the following drawing figures, in which like numerals represent like items throughout the figures.
FIG. 1 is an illustration of a system.
FIG. 2 is an illustration of an architecture for a vehicle.
FIG. 3 is an illustration of an architecture for a computing device.
FIG. 4 provides a flow diagram of an illustrative method for improved machine learning optimization.
FIG. 5 provides a graph that is useful for understanding the method of FIG. 4.
FIG. 6 provides a flow diagram that is useful for understanding an illustrative method in which a trained machine learning model and/or algorithm is employed.
FIG. 7 provides a block diagram that is useful for understanding how a robotic system (e.g., an autonomous vehicle) is controlled in accordance with the present solution.

### DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to." Definitions for additional terms that are relevant to this document are included at the end of this Detailed Description.

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

The terms "memory," "memory device," "data store," "data storage facility" and the like each refer to a non-transitory device on which computer-readable data, programming instructions or both are stored. Except where specifically stated otherwise, the terms "memory," "memory device," "data store," "data storage facility" and the like are intended to include single device embodiments, embodiments in which multiple memory devices together or collectively store a set of data or instructions, as well as individual sectors within such devices.

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process. In some cases, at least some of the processors may be remotely located, for example, at least some of the processors may be a part of one or more remote or cloud-computing services.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones and the like. An "autonomous vehicle" is a vehicle having a processor, programming instructions and drivetrain components that are controllable by the processor without requiring a human operator. An autonomous vehicle may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle.

In this document, when terms such as "first" and "second" are used to modify a noun, such use is simply intended to distinguish one item from another, and is not intended to require a sequential order unless specifically stated. In addition, terms of relative position such as "vertical" and "horizontal", or "front" and "rear", when used, are intended to be relative to each other and need not be absolute, and only refer to one possible position of the device associated with those terms depending on the device's orientation.

The term "spatial feature map" as used herein refers to a spatial-relational construct of an object. The spatial feature map is output from a function that converts or otherwise transforms a feature vector in one space (e.g., an image domain) into a feature vector in another space (e.g., a high-dimensional domain). For example, the function can return a spatial feature map comprising [a first detected feature identifier, a first detected feature classification, a first detected feature location in an image, a strength of a link from the first detected feature to a real object, a second feature identifier, a second detected feature classification, a second feature location in an image, a strength of a link from the second detect feature to the real object, . . .] from an input vector [a first pixel identifier, a first pixel location, a first pixel color, a second pixel identifier, a second pixel location, a second pixel color, . . .]. Each strength value of the spatial feature map can comprise a probabilistic strength of relation between the feature and a certain detected object (e.g., vehicle, pedestrian, bicycle, dog, etc.) in an image.

Machine learning models and/or algorithms can be used in various applications. For example, machine learning models and/or algorithms can be employed in image-based machine learning systems. Such image-based machine learning systems can be implemented in robotic systems (e.g., autonomous vehicles and articulating arms). The robotic systems may use the machine learning models and/or algorithms for various purposes such as feature extraction using multi-camera views to perform perception feature fusion for cuboid association using loss functions that iteratively process data points over multiple cycles.

In feature extraction scenarios, the machine learning models and/or algorithms may be trained to facilitate generation of spatial feature maps using captured images. The machine learning models and/or algorithms can include, but are not limited to, Convolutional Neural Networks (CNNs) and/or Recurrent Neural Networks (RNNs). Images may be input into trained CNN(s) and RNNs to produce output spatial feature maps. Each trained CNN/RNN takes a Red Green Blue (RGB) image as an input, and optionally outputs one or more predictions such as the class of the 2D image (e.g., a person, a vehicle, a cyclist, a dog, etc.). The class of the image is determined based on learned data patterns during training of the CNN/RNN. Each spatial feature map indicates a location and a strength of each detected feature in an image. The features can include, but are not limited to, edges, vertical lines, horizontal lines, bends and/or curves. A certain combination of features in a certain area of an image can indicate that a larger, more complex feature may exist in the image. For example, a spatial feature map could detect a cyclist from a combination of line features and circle features in an area of an image.

The machine learning models and/or algorithms are trained in accordance with a novel process. For example, a machine learning model ***f_{θ}*(*x*)** is trained with a training data set comprising a collection of training examples **(*x₀, y₀*)*,* (*x₁, y₁*)*****,** . . .,* (*xₙ,* ***yₙ*)*,*** where each component ***x₀, x₁,** ..., **xₙ*** represents a sensor output (e.g., an image) comprising a collection of data points ***d₁, d₂,** ..., **dᵣ*** (e.g., pixel values for the image) and each component ***y₀, y₁,** ..., **yₙ*** represents a label or ground truth. ***n*** and ***r*** are integers. The terms "label" and "ground truth" as used here both refer to a true value for a property to be predicted (e.g., a type of object (such as a cyclist), a 3D size of an object (e.g., a predicted cuboid) or a position of the object in an image) by the machine learning models/algorithms. The training process generally involves processing the training examples iteratively during a plurality of epochs ***e₁, e₂,*** ..., ***e_{w}*** of a training process. ***w*** is an integer.

The term "epoch" as used herein in relation to conventional training processes refers to a period of time in which a full collection of training examples **(*x₀, y₀*)*,* (*x₁, y₁*)*,*** ..., **(*xₙ, yₙ*)** is processed during the training of a machine learning model/algorithm. ***i*** is an integer equal to or greater than zero. In contrast, the term "epoch" as used herein in relation to the present solution refers to a period of time in which a subset of the training examples **(*xᵢ, yᵢ*)** is processed during the training of a machine learning model/algorithm for optimizing a loss function, where the subset comprises less than all of the training examples **(*x₀, y₀*)*,* (*x₁, y₁*)*****,** . . .,* **(*xₙ, yₙ*)** of the training data set. The importance of the difference in these definitions for epoch will become evident as the discussion progresses.

In each such epoch of a conventional training process, all training examples of a training data set are iterated through to optimize a loss function ***l*(*yᵢ, f_{θ}(xᵢ)).*** This iterative process may be costly, resource intensive and time consuming because the number of training examples ***n*** that are processed can be large (e.g., > 1e6). In such conventional solutions, the training of a specific machine learning model/algorithm can take a relatively long amount of time (e.g., hours or days) on expensive and energy intensive equipment. This is undesirable in some applications.

The present solution provides a novel training process for machine learning models/algorithms with a reduced computation time, less resource intensity and/or an equivalent or improved loss function between observed and predicted outputs. The novel training process of the present solution involves obtaining a training data set **(*x₀, y₀*)*,* (*x₁, y₁*)*****,** . ..,* **(*xₙ, yₙ*)*.*** The training data set can be created using image(s) generated by one or more sensor(s) (e.g., cameras and/or LiDAR systems) on a mobile platform (e.g., an autonomous vehicle). The labels or ground truth values *yᵢ* may be manually defined for each data point *xᵢ*.

Next, a derivative vector ***θ*** of a loss function ***l_{θ}(x)*** is determined for each training example **(*xᵢ, yᵢ*)*.*** Techniques for determining a derivative vector of a loss function are well known. In some scenarios, the loss function ***l_{θ}(x)*** generally involves comparing a true value ***yᵢ*** with a predicted value ***yₚ*** to obtain an output representing a distance ***D*** (e.g., a Euclidean distance) between the true value ***yᵢ*** and the predicted value ***yₚ.*** The distance ***D*** output from performance of the loss function ***l_{θ}(x)*** should be small. The derivative vector ***θ*** is randomly initialized for use in a first epoch ***e₀*** in which a first subset of training examples are analyzed, and changed over all epochs ***e₁,*** ..., ***e_{w}*** for the other subsets of training examples to iteratively improve the output of the loss function. The derivative vector ***θ*** may be changed in accordance with a known backpropagation algorithm in the direction of the derivative for the loss function (i.e., the direction of the steepest descent of the loss function). The backpropagation algorithm generally computes the gradient of the loss function with respect to the weights of the neural network for a set of input-output training examples, often called a training batch.

The norms of the derivative vectors ***θ*** are then used to select a subset ***sᵢ*** of the training examples in a training data set that should be used in an epoch of the training process. The importance of each training example relative to the other training examples in a given training data set may additionally or alternatively be used to select the training examples to be contained in the subset ***sᵢ*.** The subsets of training examples ***sᵢ*** are then used in the plurality of epochs ***e₀, e₁,*** ..., ***e_{w}*** to train a machine learning model or algorithm. The importance of each training example can be based on, for example, an uncertainty of each training example given the other training examples in the training data set, a confidence score for the label of the training example, types of features that data points in a training example are associated with (e.g., a line, curve, etc.), sizes of the features, and/or relative locations of features.

The training example subset selection process is performed such that a total number of training examples in a subset for first epoch(s) (e.g., epochs ***e₀, e₁,*** ..., ***e₅*)** is different (e.g., is less) than the total number of training examples in subsets for subsequent second epoch(s) (e.g., epochs ***e₆, e₇,** ...,* ***e₂₀*)*.*** The total number of training examples may be increased or otherwise varied for subsequent epochs. For example, five percent of the total training examples of a training data set are to be used in a first epoch *e₀,* while twenty percent of the total training examples of the training data set are to be used in a second subsequent epoch ***e₁,*** ..., or ***e_{w}*.** These percentages can be predefined or dynamically determined based on a total number of training examples in the training data set and/or a confidence value associated with a label of each training example (e.g., reflecting the accuracy of the data).

The training examples of the training data set are selected for inclusion in a subset *sᵢ* based on their rankings. The training examples are ranked in accordance with the norms of their derivative vectors. The training examples with the greatest or best rankings are then selected for inclusion in the subset *sᵢ*. For example, ***M*** training examples of the training data set are selected which have the greatest or best ranking, and therefore are contained in a subset ***s₁. N*** training examples are selected which have the greatest or best ranking, and therefore are contained in a subset ***s₂. N*** may be the same as or different than ***M*.** In effect, only a subset of the training examples is used in each epoch as compared to prior art systems which use all training examples in every epoch. This feature of the present solution reduces computational time of the training process.

The above described training process has a reduced training time without compromising interference performance and many novel features. The novel features include, but are not limited to, the dynamic use of training data depending on the importance thereof and the production of side effect information about the training examples by collecting the derivative information per training example.

The present solution will be described below in the context of an autonomous vehicle application. The present solution is not limited to autonomous vehicle applications. The present solution can be used in other applications such as other robotic applications (e.g., to control an articulating arm).

### Illustrative Implementing Systems

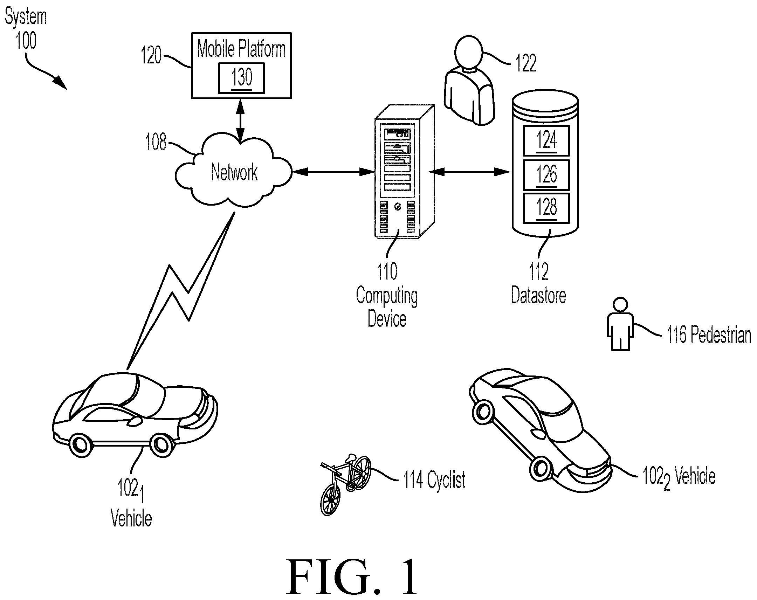

Referring now to FIG. 1, there is provided an illustration of an illustrative system 100 implementing the present solution. System **100** comprises a mobile platform **120** communicatively coupled to a computing device **110** via a network **108** (e.g., the Internet and/or cellular network). The mobile platform **120** is configured to generate sensor data **124.** The mobile platform can include, but is not limited to, a land vehicle (as shown in FIG. 1), an aircraft, a watercraft, a subterrene, or a spacecraft. The sensor data **124** can include, but is not limited to, images and/or LiDAR datasets. The sensor data **124** is communicated from the mobile platform **120** to the computing device **110** for processing and/or storage in datastore **112.**

A user **122** of the computing device **110** can perform user-software interactions to access the sensor data **124** and use the sensor data to generate training data sets **126** for machine learning model(s) or algorithm(s) **128.** Each training data set **126** comprises a plurality of training examples **(*x₀, y₀*)*,* (*x₁, y₁*)*****,** . . .,* **(*xₙ, yₙ*)*.*** The user **122** can manually define the labels or ground truth values ***yᵢ*** for each data set ***xᵢ*.** The training data set **126** is then stored in datastore **112** (e.g., a database) and/or used by the computing device **110** during a training process to train the machine learning model(s)/algorithm(s) **128** to, for example, facilitate scene perception by another mobile platform using loss functions that iteratively process training examples over multiple cycles. The scene perception can be achieved via feature extraction using multi-camera views, object detection using the extracted features and/or object prediction (e.g., predicted cuboids and associations of predicted cuboids with detected objects). The training process will be described in detail below.

Once trained, the machine learning model(s)/algorithm(s) **128** is(are) deployed on the other mobile platforms such as vehicle **102₁.** Vehicle **102₁** can travel along a road in a semi-autonomous or autonomous manner. Vehicle **102₁** is also referred to herein as an Autonomous Vehicle (AV). The AV **102₁** can include, but is not limited to, a land vehicle (as shown in FIG. 1), an aircraft, a watercraft, a subterrene, or a spacecraft. AV **102₁** is generally configured to use the trained machine learning model(s)/algorithm(s) **128** to detect objects **102₂, 114, 116** and perceive scenes in proximity thereto. The objects can include, but are not limited to, a vehicle **102₂,** a cyclist **114** (such as a rider of a bicycle, electric scooter, motorcycle, or the like) and/or a pedestrian **116.**

When scene perception is made, AV **102₁** performs operations to: generate one or more possible object trajectories for the detected object; and analyze at least one of the generated possible object trajectories to determine whether or not there is at least a threshold possibility or likelihood that a collision will occur between the AV and object if the AV is to follow a given trajectory. If not, the AV **102₁** is caused to follow the given vehicle trajectory. If so, the AV **102₁** is caused to (i) follow another vehicle trajectory with a relatively low probability of collision with the object or (ii) perform a maneuver to reduce the probability of collision with the object or avoid collision with the object (e.g., brakes and/or changes direction of travel).

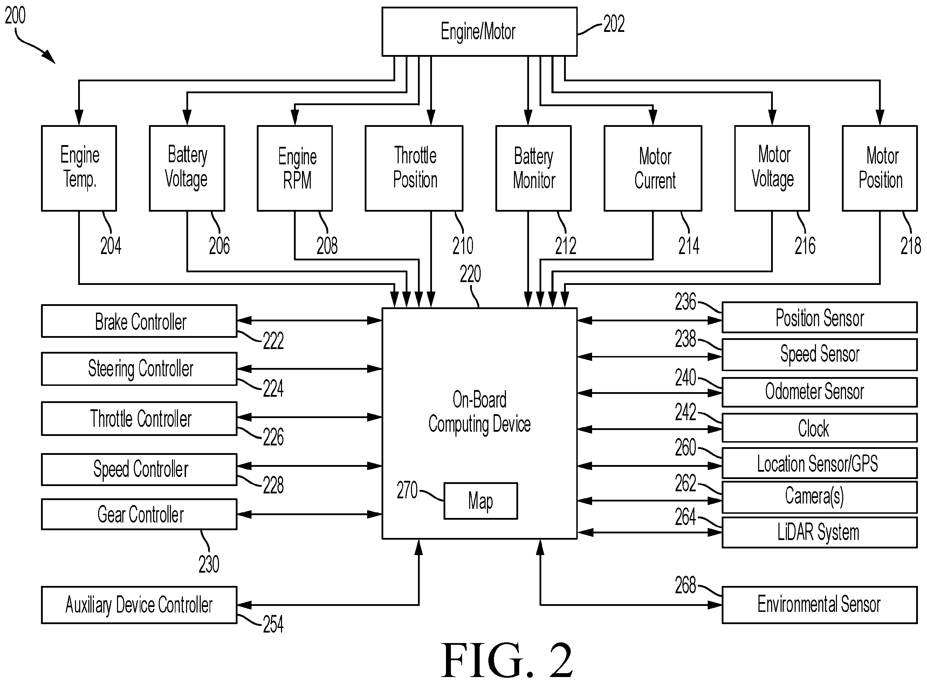

Referring now to FIG. 2, there is provided an illustration of an illustrative system architecture for a mobile platform **200.** Mobile platforms **102₁**, **102₂** and/or **120** of FIG. 1 can have the same or similar system architecture as that shown in FIG. 2. Thus, the following discussion of mobile platform **200** is sufficient for understanding mobile platform (s) **102₁**, **102₂, 120** of FIG. 1.

As shown in FIG. 2, the mobile platform **200** includes an engine or motor **202** and various sensors **204-218** for measuring various parameters of the mobile platform. In gas-powered or hybrid mobile platforms having a fuel-powered engine, the sensors may include, for example, an engine temperature sensor **204,** a battery voltage sensor **206,** an engine Rotations Per Minute (RPM) sensor **208,** and a throttle position sensor **210.** If the mobile platform is an electric or hybrid mobile platform, then the mobile platform may have an electric motor, and accordingly will have sensors such as a battery monitoring system **212** (to measure current, voltage and/or temperature of the battery), motor current **214** and motor voltage **216** sensors, and motor position sensors such as resolvers and encoders **218.**

Operational parameter sensors that are common to both types of mobile platforms include, for example: a position sensor **236** such as an accelerometer, gyroscope and/or inertial measurement unit; a speed sensor **238;** and an odometer sensor **240.** The mobile platform also may have a clock **242** that the system uses to determine mobile platform time during operation. The clock **242** may be encoded into an on-board computing device, it may be a separate device, or multiple clocks may be available.

The mobile platform also will include various sensors that operate to gather information about the environment in which the mobile platform is traveling. These sensors may include, for example: a location sensor **260** (e.g., a Global Positioning System (GPS) device); and image-based perception sensors such as one or more cameras **262.** The sensors also may include environmental sensors **268** such as a precipitation sensor and/or ambient temperature sensor. The image-based perception sensors may enable the mobile platform to detect objects that are within a given distance range of the mobile platform **200** in any direction, while the environmental sensors collect data about environmental conditions within the mobile platform's area of travel.

During operations, information is communicated from the sensors to the on-board computing device **220.** The on-board computing device **220** can (i) cause the sensor information to be communicated from the mobile platform to an external device (e.g., computing device **110** of FIG. 1) and/or (ii) use the sensor information to control operations of the mobile platform. For example, the on-board computing device **220** may control: braking via a brake controller **232;** direction via a steering controller **224;** speed and acceleration via a throttle controller **226** (in a gas-powered vehicle) or a motor speed controller **228** (such as a current level controller in an electric vehicle); a differential gear controller **230** (in vehicles with transmissions); and/or other controllers.

Geographic location information may be communicated from the location sensor 260 to the on-board computing device **220,** which may then access a map of the environment that corresponds to the location information to determine known fixed features of the environment such as streets, buildings, stop signs and/or stop/go signals.

In some scenarios, the on-board computing device **220** detect a moving object and perform operations when such detection is made. For example, the on-board computing device **220** may generate one or more possible object trajectories for the detected object, and analyze the possible object trajectories to assess the risk of a collision between the object and the AV if the AV was to follow a given platform trajectory. If the risk does not exceed the acceptable threshold, then the on-board computing device **220** may cause the mobile platform **200** to follow the given platform trajectory. If the risk exceeds an acceptable threshold, the on-board computing device **220** performs operations to: (i) determine an alternative platform trajectory and analyze whether the collision can be avoided if the mobile platform follows this alternative platform trajectory; or (ii) causes the mobile platform to perform a maneuver (e.g., brake, accelerate, or swerve).

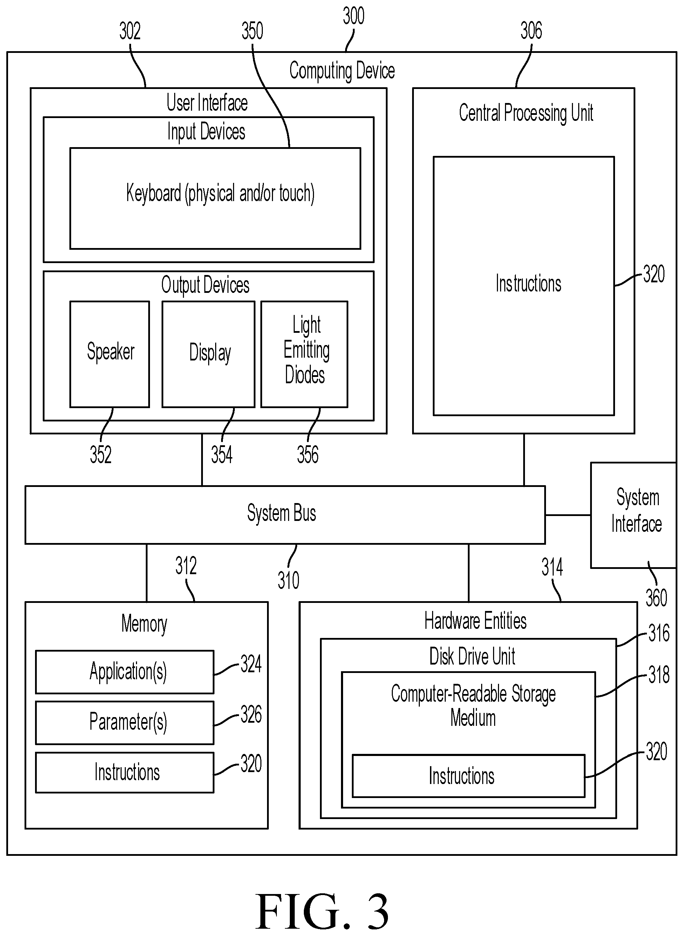

Referring now to FIG. 3, there is provided an illustration of an illustrative architecture for a computing device **300.** The computing device **110** of FIG. 1 and/or the on-board computing device **220** of FIG. 2 is/are the same as or similar to computing device **300.** As such, the discussion of computing device **300** is sufficient for understanding the computing device **110** of FIG. 1 and the on-board computing device **220** of FIG. 2.

Computing device **300** may include more or less components than those shown in FIG. 3. However, the components shown are sufficient to disclose an illustrative solution implementing the present solution. The hardware architecture of FIG. 3 represents one implementation of a representative computing device configured to operate a vehicle, as described herein. As such, the computing device **300** of FIG. 3 implements at least a portion of the method(s) described herein.

Some or all components of the computing device **300** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 3, the computing device **300** comprises a user interface **302,** a Central Processing Unit (CPU) **306,** a system bus **310,** a memory **312** connected to and accessible by other portions of computing device **300** through system bus **310,** a system interface **360,** and hardware entities **314** connected to system bus **310.** The user interface can include input devices and output devices, which facilitate user-software interactions for controlling operations of the computing device **300.** The input devices include, but are not limited to, a physical and/or touch keyboard **350.** The input devices can be connected to the computing device **300** via a wired or wireless connection (e.g., a Bluetooth^{®} connection). The output devices include, but are not limited to, a speaker **352,** a display **354,** and/or light emitting diodes **356.** System interface **360** is configured to facilitate wired or wireless communications to and from external devices (e.g., network nodes such as access points, etc.).

At least some of the hardware entities **314** perform actions involving access to and use of memory **312,** which can be a Random Access Memory (RAM), a disk drive, flash memory, a Compact Disc Read Only Memory (CD-ROM) and/or another hardware device that is capable of storing instructions and data. Hardware entities **314** can include a disk drive unit **316** comprising a computer-readable storage medium **318** on which is stored one or more sets of instructions **320** (e.g., software code) configured to implement one or more of the methodologies, procedures, or functions described herein. The instructions **320** can also reside, completely or at least partially, within the memory **312** and/or within the CPU **306** during execution thereof by the computing device **300.** The memory **312** and the CPU **306** also can constitute machine-readable media. The term "machine-readable media", as used here, refers to a single medium or multiple media (e.g., a centralized or distributed database, and/or associated caches and servers) that store the one or more sets of instructions **320.** The term "machine-readable media", as used here, also refers to any medium that is capable of storing, encoding or carrying a set of instructions **320** for execution by the computing device **300** and that cause the computing device **300** to perform any one or more of the methodologies of the present disclosure.

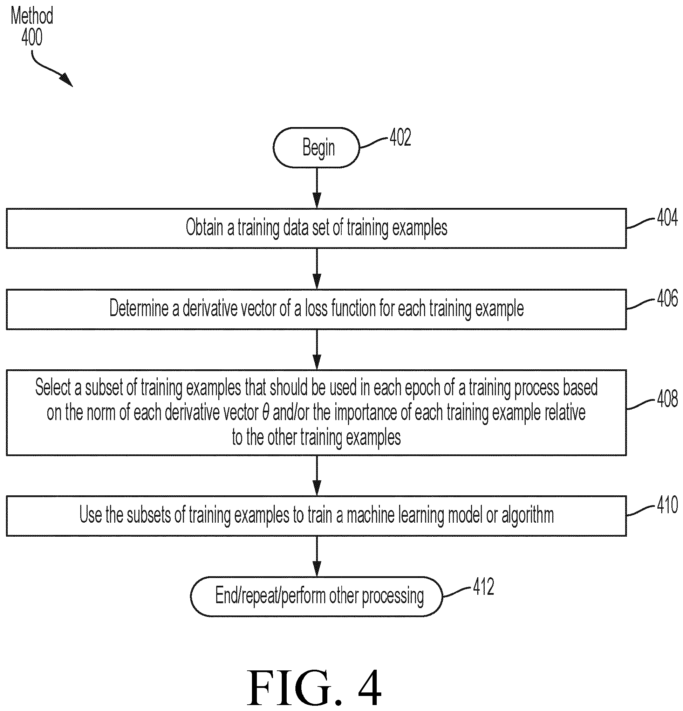

Referring now to FIG. 4, there is provided a flow diagram of an illustrative method **400** for training a machine learning model or algorithm (e.g., machine learning model/algorithm **128** of FIG. 1). Method **400** can be implemented in mobile platform **120** of FIG. 1, computing device **110** of FIG. 1 and/or computing device **300** of FIG. 3.

Method **400** begins with **402** and continues with **404** where it is provided via a computing device a training data set (e.g., training data set **126** of FIG. 1), e.g., obtained from a datastore (e.g., datastore **112** of FIG. 1 and/or memory **312** of FIG. 3). The training data set comprises a plurality of training examples **(*x₀, y₀*)*,* (*x₁, y₁*)*****,** . . .,* **(*xₙ, yₙ*)*.*** As noted above, the training data set may be created using image(s) and/or other sensor data generated by one or more sensor(s) (e.g., sensors **130** of FIG. 1) on a mobile platform (e.g., mobile platform **120** of FIG. 1). The labels or ground truth values ***yᵢ*** may have been manually defined by a user (e.g., user **122** of FIG. 1) of the computing device for each data set *xᵢ* of the training examples.

Next in **406,** a derivative vector ***θ*** of a loss function ***l_{θ}(x)*** is determined for each training example **(*xᵢ, yᵢ*)*.*** Techniques for determining derivative vectors for loss functions are well known. In some scenarios, the loss function ***l_{θ}(x)*** involves comparing a true value *yᵢ* with a predicted value ***yₚ*** to obtain an output representing a distance (e.g., a Euclidean distance) between the true value ***yᵢ*** and the predicted value ***yₚ.*** The distance output by the loss function ***l_{θ}(x)*** should be small. The derivative vector ***θ*** may be randomly initialized for use in a first epoch ***e₀*** in which a first subset of training examples ***s₀*** is analyzed, and changed over all epochs ***e₁,*** ..., ***e_{w}*** for the other subsets of training examples ***s₁*,** ..., ***sₙ*** to iteratively improve the output of the loss function. The derivative vector *θ* may be changed in accordance with a known backpropagation algorithm in the direction of the derivative for the loss function (i.e., the direction of the steepest descent of the loss function). The backpropagation algorithm generally computes the gradient of the loss function with respect to the weights of the neural network for a set of input-output training examples, often called a training batch.

Upon completing **406,** the computing device performs operations to select a subset of training examples that should be used in each epoch of the training process based on the norms of the derivative vectors ***θ*** associated with the training examples. Optionally, the subset of training examples may also be selected based on the importance of each training example relative to the others in the given training dataset. The training example subset selection process is performed such that a total number of training examples in a subset for first epoch(s) (e.g., epochs ***e₀, e₁,*** ..., ***e₅***) is different (e.g., is less) than the total number of training examples in subsets for subsequent second epoch(s) (e.g., epochs ***e₆, e₇,** ...,* ***e₂₀*)*.*** The total number of training examples may be increased or otherwise varied for subsequent epochs. For example, five percent of the total training examples of data set ***x₁*** are to be used in a first epoch *e₀,* while twenty percent of the total training examples of data set ***x₂*** are to be used in a second subsequent epoch ***e₁,*** ..., or ***e_{w}**.* These percentages can be predefined or dynamically determined based on a total number of training examples in each data set *xᵢ* and/or confidence values associated with labels of the training examples.

The training examples are selected for inclusion in a subset *sᵢ* based on their rankings. The training examples are ranked in accordance with the norms of their derivative vectors. The training examples with the greatest or best rankings are then selected for inclusion in the subset *sᵢ*. For example, ***M*** training examples of a training data set are selected which have the greatest or best ranking, and therefore are contained in a subset ***s₁. N*** training examples are selected which have the greatest or best ranking, and therefore are contained in a subset ***s₂*. *N*** may be the same as or different than ***M*.** In effect, only a subset of the training examples is used in each epoch as compared to prior art systems which use all training examples in every epoch. This feature of the present solution reduces computational time of the training process.

The subsets are then used in **410** to train the machine learning model or algorithm. Techniques for training machine learning models/algorithms using training data are known. Subsequently, **412** is performed where method **400** ends or other operations are performed (e.g., return to **402).**

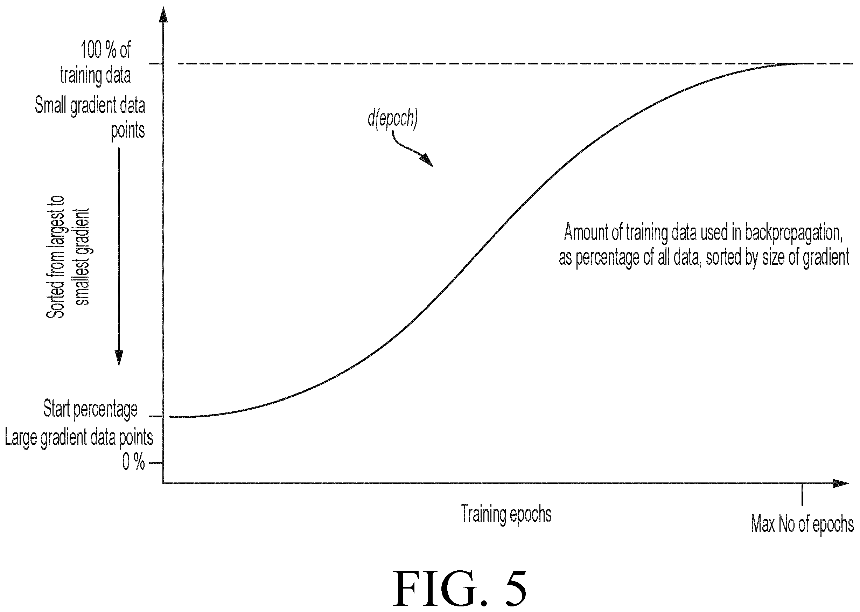

Referring now to FIG. 5, there is provided a graph that is useful for understanding the novel training process of the present solution. In order for the training process to work, certain design choices must be made. For example, the system must (i) know how many epochs are to be used for training a machine learning model or algorithm, (ii) know a starting percentage (e.g., 5%) of the training examples that should be used during a first epoch, and/or (iii) know a desired shape of the curve ***c(epoch).*** Another parameter that may be known by the system is the update frequency for the norm of the gradients for all training examples (e.g., every 5^{th} epoch).

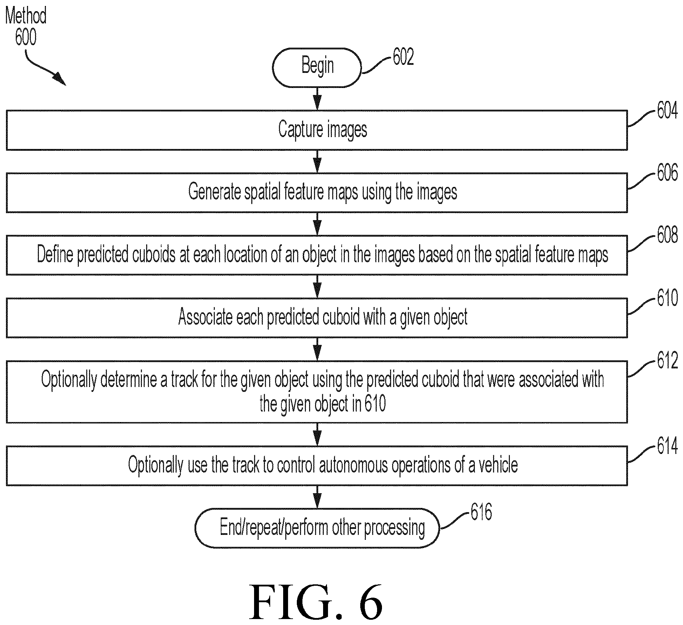

Referring now to FIG. 6, there is provided a flow diagram of a method **600** for image-based perception using machine learning model(s)/algorithm(s) which was(were) trained in accordance with method **400** discussed above. In method **600,** the trained machine learning model(s)/algorithm(s) (such as a CNN or RNN) is(are) used to extract features from images. The features are used to predict 3D cuboids for objects in a scene. It can be challenging to determine if two or more cuboid predictions correspond to the same object from different cameras with overlapping FOVs. This is particularly challenging when only a partial view of an object is present in one or more cameras or when the cuboid estimates contain a relatively large amount of noise. Rather than rely solely on the estimated 3D coordinates when associating cuboids from multiple cameras, the machine learning model(s)/algorithm(s) is(are) trained to output a feature embedding that can be used for object-cuboid associations. This can be done by passing the intermediate features and camera calibration information in the region used for a cuboid's prediction through additional layers of computation (e.g., 2D convolutions and/or fully connected layers).

During the training process of FIG. 4, the intermediate feature embedding output by the machine learning model(s)/algorithm(s) can be passed into a loss function that encourages the embedding to have a small distance to embeddings for the same object from a different view, and a large distance from other objects. This can be accomplished via, for example, a triple loss algorithm.

As shown in FIG. 6, method **600** begins with **602** and continues with **604** where images are captured by a mobile platform (e.g., mobile platform **102₁** of FIG. 1) on which the trained machine learning model/algorithm has been deployed. The images can be captured by monocular cameras (e.g., cameras **262** of FIG. 2) with overlapping FOVs. Each image comprises 3 layers (or channels) of information superimposed on each other - a Red (R) layer, a Green (G) layer and a Blue (B) layer. This image may also be referred to as an RGB image. The images can be stored in a datastore local to and/or remote from the mobile platform (e.g., datastore **112** of FIG. 1 and/or memory **312** of FIG. 3).

In **606,** spatial feature maps are generated by the computing device using the images captured in **604.** The images can be used by the trained machine learning model/algorithm (e.g., a CNN) to generate the spatial feature maps. For example, images are input into a trained CNN to produce output spatial feature maps. The trained machine learning model/algorithm can apply filters or feature detectors to the images to produce the spatial feature maps. For example, a trained CNN takes an RGB image as an input, and optionally outputs the class of the 2D image (e.g., a person, a vehicle, a cyclist, a dog, etc.). The class of the image is determined based on learned data patterns during training of the CNN. Each spatial feature map indicates a location and a strength of each detected feature in an image. The features can include, but are not limited to, edges, vertical lines, horizontal lines, bends and/or curves. A certain combination of features in a certain area of an image can indicate that a larger, more complex feature may exist in the image. For example, a spatial feature map could detect a cyclist (e.g., cyclist **114** of FIG. 1) from a combination of line features and circle features in a given area of an image.

In **608,** predicted cuboids are defined at each location of an object in the images based on the spatial feature maps. Each predicted cuboid comprises an orientated 3D box encompassing features that are associated with a given object. Techniques for defining predicted cuboids from spatial feature maps are well known. One such known technique that can be employed in **608** is using linear regression of the feature's 3D coordinates to learn edges of an object in an image and using the edges to define a predicted 3D cuboidal shape for the object. The predicted 3D cuboidal shape defined for the object is referred to as a predicted cuboid. Such known techniques can be used in **608.**

In **610,** each predicted cuboid is associated with a given object. This association can be generally made by: determining whether two or more of the predicted cuboids should be associated with a same detected object; and assigning the predicted cuboids to detected objects based on results of the determinations. The assignment can be made, for example, by storing object identifiers in a datastore to be associated with the predicted cuboids.

In some scenarios, the determination as to whether predicted cuboids should be associated with the same object is made by generating a feature embedding from a region of the spatial feature maps for each predicted cuboid. The parameters for generating these feature embeddings can be learned via, for example, a triplet or quadruplet loss algorithm. The embeddings are then used to obtain values for the visual features of each object in the images. These visual feature values are compared to each other to determine whether they are the same as each other by a certain amount or degree (e.g., 70% or the difference between two visual feature values is less than a threshold value). The generation of an additional embedding trained with, for example, a triplet loss algorithm addresses different angles of the objects and any occlusion of the objects. The feature embedding can be generated by applying a function (e.g., a 2D convolution function) point-wise to each point of the spatial feature map included in the predicted cuboid so as to transform the same to a data point feature embedding (e.g., visual descriptor of what the object is). Thus, the term "feature embedding" as used herein refers to a vector representation of visual and spatial features extracted from an image.

Triplet loss algorithms are well known. The triplet loss function is a machine learning algorithm where, during training, a baseline input is compared to a positive input and a negative input. The distance from the baseline input to the positive input is minimized, and the distance from the baseline input to the negative input is maximized. The triplet loss algorithm can be described using a Euclidean distance function as shown by the following mathematical equation (1). $L \left(A, P, N\right) = max \left({\left‖f\left(A\right)-f\left(P\right)\right‖}^{2}-{\left‖f\left(A\right)-f\left(N\right)\right‖}^{2}+α, 0\right)$ where **A** is an anchor input, **P** is a positive input of a same class as **A, N** is a negative input of a different class as **A, α** is a margin between positive and negative pairs, and f is a feature embedding.

Next, the computing device determines a difference between each set of two feature embeddings. For example, an L1 or L2 distance function can be used to determine this difference. The L1 distance function may be defined by the following mathematical equation (2). $L 1 = {\sum }_{i = 1}^{n} \left|{y}_{true}-{y}_{predicted}\right|$ where L1 represents results from performing the L1 distance function, **y₁** represents an embedding derived from one feature map, and **y₂** represents an embedding derived from a second feature map. The L2 distance function may be defined by the following mathematical equation (3). $L 2 = {\sum }_{i = 1}^{n} {\left({y}_{true}-{y}_{predicted}\right)}^{2}$ where L2 represents results from performing the L2 distance function.

The computing device also determines a difference between coordinates of each set of predicted cuboids. Methods for determining differences between coordinate are well known. If the differences are less than respective threshold values, then the computing device concludes that the predicted cuboids should be associated with the same object. If the differences are less than the respective threshold values, then computing device concludes that the predicted cuboids should not be associated with the same object.

Once the object-cuboid associations have been made in **610** of FIG. 6, a track for a given object is optionally determined in **614.** Techniques for determining object tracks based on predicted cuboids are well known. The object track is then optionally used in **616** to control autonomous operations of the mobile platform. For example, the predicted cuboids are used to determine a track for the respective object. The object track can then be used to facilitate generation of a platform trajectory which the mobile platform is caused to follow. Subsequently, **618** is performed where method **600** ends or other operations are performed.

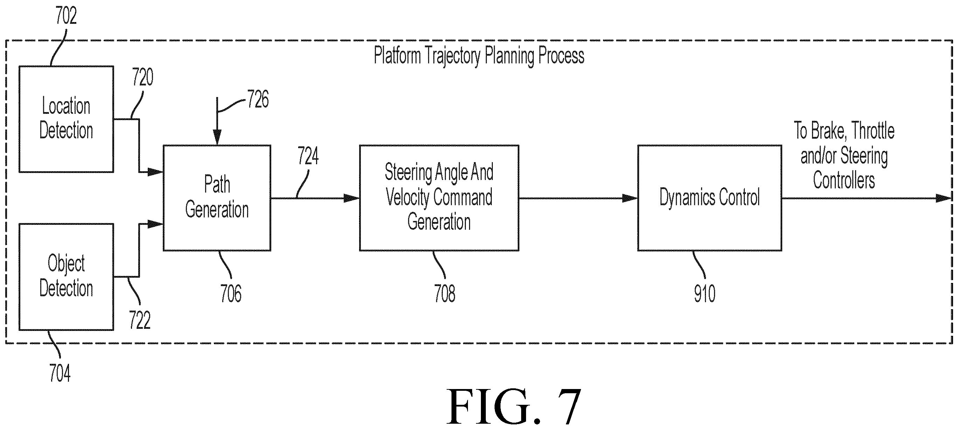

The predictions (e.g., cuboids) generated during method **600** can be used by a mobile platform for object trajectory prediction, general scene understanding, platform trajectory generation, and/or collision avoidance. A block diagram is provided in FIG. 7 that is useful for understanding how platform control is achieved in accordance with the object related information estimated based on the modified image. All or some of the operations performed in FIG. 7 can be performed by the on-board computing device of a mobile platform (e.g., AV **102₁** of FIG. 1) and/or a remote computing device (e.g., computing device **110** of FIG. 1).

In block **702,** a location of the mobile platform is detected. This detection can be made based on sensor data output from a location sensor (e.g., location sensor **260** of FIG. 2) of the mobile platform. This sensor data can include, but is not limited to, GPS data. Information **720** specifying the detected location of the mobile platform is then passed to block **706.**

In block 704, an object is detected within proximity of the mobile platform. This detection is made based on sensor data output from a camera (e.g., camera **262** of FIG. 2) of the mobile platform and/or LiDAR datasets generated by a LiDAR system (e.g., LiDAR system **264** of FIG. 2) of the mobile platform. The manner in which the image-based perception is achieved was discussed above in relation to FIG. 6. Image-based perception information **722** about the detected object is passed to block **706.** This information includes, but is not limited to, cuboid information (e.g., a position of an object, an orientation of the object, and a spatial extent of the object), an initial predicted trajectory of the object, a speed of the object, and/or a classification of the object. The initial predicted object trajectory can include, but is not limited to, a linear path pointing in the heading direction of the object.

In block **706,** a platform trajectory is generated using the information from blocks **702** and **704.** Techniques for determining a platform trajectory are well known in the art. Any known or to be known technique for determining a platform trajectory can be used herein without limitation. For example, in some scenarios, such a technique involves determining a trajectory for the mobile platform that would pass the object when the object is in front of the mobile platform, the object has a heading direction that is aligned with the direction in which the mobile platform is moving, and the object has a length that is greater than a threshold value. The present solution is not limited to the particulars of this scenario. The platform trajectory **724** can be determined based on the information **720,** the image-based perception information **722,** and/or a road map **726** which is pre-stored in a datastore of the mobile platform. The platform trajectory **724** may represent a smooth path that does not have abrupt changes that would otherwise provide passenger discomfort. For example, the platform trajectory is defined by a path of travel along a given lane of a road in which the object is not predicted travel within a given amount of time. The platform trajectory **724** is then provided to block **708.**

In block **708,** a steering angle and velocity command is generated based on the platform trajectory **724.** The steering angle and velocity command are provided to block **710** for dynamics control.

## Claims

1. A computer-implemented method for training a neural network machine learning model for controlling operations of a mobile platform,
wherein said machine learning model is trained for image-based prediction of cuboids associated with a given object for object trajectory prediction, general scene understanding, platform trajectory generation, and/or collision avoidance operations of the mobile platform,
comprising:
providing a training data set comprising a collection of training examples, each training example comprising at least one data point;
wherein the at least one data point is obtained from an image generated by a camera or a Lidar system;
wherein each said training example further comprises a true value for at least one cuboid to be predicted by the machine learning model;
selecting a first subset of training examples from the collection of training examples based on at least a derivative vector of a loss function for each training example of the collection of training examples, whereby the selection comprises an inclusion in the first subset of selected training examples based on a ranking of the training examples, said ranking in accordance with the norms of their derivative vectors with higher rankings for larger derivative norms;
training the machine learning model using the first subset of training examples; wherein a total number of training examples in the first subset is unequal to a total number of training examples in the training data set; and
providing the trained neural network machine learning model for controlling operations of a mobile platform.

2. The method according to claim 1, further comprising selecting the first subset of training examples additionally based on an importance of each training examples relative to the other training examples in the collection of training examples.

3. The method according to any one of the preceding claims, further comprising selecting a second subset of training examples based on at least one of a derivative vector of the loss function for each training example of the collection of training examples and an importance of each training examples relative to the other training examples in the collection of training examples.

4. The method according to claim 3, wherein the first subset of training examples is used in a first epoch in said training and the second subset of training examples is used in a second epoch of said training.

5. The method according to claim 3 or 4, wherein a total number of training examples in the second subset is different than the total number of training examples in the first subset.

6. A system comprising means for performing the method according to any of claims 1 to 5.

7. A computer program, or the computer readable storage medium storing the program, comprising instructions which when executed by at least one processor cause any of the processors to perform the steps of the method of any of claims 1 to 5.

8. A computer-implemented trained neural network machine learning model for image-based prediction of cuboids associated with a given object, or a data storage medium storing the model for image-based prediction of cuboids associated with a given object, as generated by any of claims 1 to 5.

9. Use of the trained machine learning model for image-based prediction of cuboids associated with a given object as generated by any of claims 1 to 5 for operating a vehicle or a mobile platform.

10. A vehicle or a mobile platform configured to be operated or controlled at least partially via the trained machine learning model for image-based prediction of cuboids associated with a given object,wherein the trained machine learning model is generated according to any of claims 1 to 5.

## Patentansprüche

1. Ein computerimplementiertes Verfahren zum Trainieren eines neuronalen Netzwerkmodells für maschinelles Lernen zur Steuerung des Betriebs einer mobilen Plattform,
wobei das genannte maschinelle Lernmodell für die bildbasierte Vorhersage von Quadern, die einem gegebenen Objekt zugeordnet sind, für die Objektbahnvorhersage, das allgemeine Szenenverständnis, die Plattformbahngenerierung und/oder Kollisionsvermeidungsoperationen der mobilen Plattform trainiert wird,
bestehend aus:
Bereitstellung eines Trainingsdatensatzes, der eine Sammlung von Trainingsbeispielen umfasst, wobei jedes Trainingsbeispiel mindestens einen Datenpunkt umfasst;
wobei der mindestens eine Datenpunkt aus einem Bild gewonnen wird, das von einer Kamera oder einem Lidar-System erzeugt wurde;
wobei jedes dieser Trainingsbeispiele ferner einen wahren Wert für mindestens einen Quader enthält, der vom maschinellen Lernmodell vorhergesagt werden soll;
Auswahl einer ersten Teilmenge von Trainingsbeispielen aus der Sammlung von Trainingsbeispielen auf der Grundlage mindestens eines Ableitungsvektors einer Verlustfunktion für jedes Trainingsbeispiel der Sammlung von Trainingsbeispielen, wobei die Auswahl die Aufnahme in die erste Teilmenge der ausgewählten Trainingsbeispiele auf der Grundlage einer Rangfolge der Trainingsbeispiele umfasst, wobei diese Rangfolge gemäß den Normen ihrer Ableitungsvektoren erfolgt, wobei höhere Ränge für größere Ableitungsnormen gelten;
Das maschinelle Lernmodell wird anhand der ersten Teilmenge der Trainingsbeispiele trainiert;
wobei die Gesamtzahl der Trainingsbeispiele in der ersten Teilmenge ungleich der Gesamtzahl der Trainingsbeispiele im Trainingsdatensatz ist; und
Bereitstellung des trainierten neuronalen Netzwerkmodells für maschinelles Lernen zur Steuerung der Abläufe einer mobilen Plattform.

2. Das Verfahren nach Anspruch 1, ferner umfassend die Auswahl der ersten Teilmenge von Trainingsbeispielen zusätzlich auf der Grundlage der Wichtigkeit jedes Trainingsbeispiels im Verhältnis zu den anderen Trainingsbeispielen in der Sammlung von Trainingsbeispielen.

3. Verfahren nach einem der vorhergehenden Ansprüche, wobei ferner eine zweite Teilmenge von Trainingsbeispielen auf der Grundlage mindestens eines der folgenden Parameter ausgewählt wird: eines Ableitungsvektors der Verlustfunktion für jedes Trainingsbeispiel aus der Sammlung von Trainingsbeispielen und der Wichtigkeit jedes Trainingsbeispiels im Verhältnis zu den anderen Trainingsbeispielen in der Sammlung von Trainingsbeispielen.

4. Verfahren nach Anspruch 3, wobei die erste Teilmenge der Trainingsbeispiele in einer ersten Epoche des Trainings und die zweite Teilmenge der Trainingsbeispiele in einer zweiten Epoche des Trainings verwendet wird.

5. Verfahren nach Anspruch 3 oder 4, wobei die Gesamtzahl der Trainingsbeispiele in der zweiten Teilmenge von der Gesamtzahl der Trainingsbeispiele in der ersten Teilmenge abweicht.

6. Ein System mit Mitteln zur Durchführung des Verfahrens nach einem der Ansprüche 1 bis 5.

7. Ein Computerprogramm oder ein computerlesbares Speichermedium, auf dem das Programm gespeichert ist, das Anweisungen umfasst, die, wenn sie von mindestens einem Prozessor ausgeführt werden, einen der Prozessoren veranlassen, die Schritte des Verfahrens nach einem der Ansprüche 1 bis 5 durchzuführen.

8. Ein computerimplementiertes, trainiertes neuronales Netzwerk-Maschinenlernmodell zur bildbasierten Vorhersage von Quadern, die einem gegebenen Objekt zugeordnet sind, oder ein Datenspeichermedium, das das Modell zur bildbasierten Vorhersage von Quadern speichert, die einem gegebenen Objekt zugeordnet sind, wie es von einem der Ansprüche 1 bis 5 generiert wurde.

9. Verwendung des trainierten Modells für maschinelles Lernen zur bildbasierten Vorhersage von Quadern, die mit einem gegebenen Objekt in Verbindung stehen, wie sie von einem der Ansprüche 1 bis 5 für den Betrieb eines Fahrzeugs oder einer mobilen Plattform erzeugt werden.

10. Ein Fahrzeug oder eine mobile Plattform, die so konfiguriert ist, dass sie zumindest teilweise über das trainierte maschinelle Lernmodell zur bildbasierten Vorhersage von Quadern, die einem gegebenen Objekt zugeordnet sind, betrieben oder gesteuert werden kann, wobei das trainierte maschinelle Lernmodell gemäß einem der Ansprüche 1 bis 5 generiert wird.

## Revendications

1. Méthode mise en œuvre par ordinateur pour l'entraînement d'un modèle d'apprentissage automatique de réseau neuronal destiné au contrôle des opérations d'une plateforme mobile,
dans lequel ledit modèle d'apprentissage automatique est entraîné pour la prédiction, basée sur l'image, des cuboïdes associés à un objet donné pour la prédiction de la trajectoire de l'objet, la compréhension générale de la scène, la génération de la trajectoire de la plateforme et/ou les opérations d'évitement de collision de la plateforme mobile,
comprenant :
fournir un ensemble de données d'entraînement comprenant une collection d'exemples d'entraînement, chaque exemple d'entraînement comprenant au moins un point de données ;
dans lequel au moins un point de données est obtenu à partir d'une image générée par une caméra ou un système Lidar ;
dans lequel chaque exemple d'entraînement comprend en outre une valeur réelle pour au moins un cuboïde à prédire par le modèle d'apprentissage automatique ;
sélection d'un premier sous-ensemble d'exemples d'entraînement à partir de la collection d'exemples d'entraînement sur la base d'au moins un vecteur dérivé d'une fonction de perte pour chaque exemple d'entraînement de la collection d'exemples d'entraînement, la sélection comprenant une inclusion dans le premier sous-ensemble d'exemples d'entraînement sélectionnés sur la base d'un classement des exemples d'entraînement, ledit classement étant conforme aux normes de leurs vecteurs dérivés, les classements étant plus élevés pour les normes dérivées plus importantes ;
entraînement du modèle d'apprentissage automatique à l'aide du premier sous-ensemble d'exemples d'entraînement ;
dans lequel le nombre total d'exemples d'entraînement dans le premier sous-ensemble est différent du nombre total d'exemples d'entraînement dans l'ensemble de données d'entraînement ; et
fourniture du modèle d'apprentissage automatique de réseau neuronal entraîné pour contrôler les opérations d'une plateforme mobile.

2. Le procédé selon la revendication 1, comprenant en outre la sélection du premier sous-ensemble d'exemples d'entraînement en fonction de l'importance de chaque exemple d'entraînement par rapport aux autres exemples d'entraînement de la collection d'exemples d'entraînement.

3. Le procédé selon l'une quelconque des revendications précédentes, comprenant en outre la sélection d'un deuxième sous-ensemble d'exemples d'entraînement basé sur au moins un vecteur dérivé de la fonction de perte pour chaque exemple d'entraînement de la collection d'exemples d'entraînement et une importance de chaque exemple d'entraînement par rapport aux autres exemples d'entraînement de la collection d'exemples d'entraînement.

4. Procédé selon la revendication 3, dans lequel le premier sous-ensemble d'exemples d'entraînement est utilisé dans une première époque dudit entraînement et le deuxième sous-ensemble d'exemples d'entraînement est utilisé dans une deuxième époque dudit entraînement.

5. Procédé selon la revendication 3 ou 4, dans lequel le nombre total d'exemples d'entraînement dans le deuxième sous-ensemble est différent du nombre total d'exemples d'entraînement dans le premier sous-ensemble.

6. Un système comprenant des moyens pour mettre en œuvre le procédé selon l'une quelconque des revendications 1 à 5.

7. Un programme informatique, ou le support de stockage lisible par ordinateur contenant le programme, comprenant des instructions qui, lorsqu'elles sont exécutées par au moins un processeur, amènent l'un des processeurs à effectuer les étapes de la méthode de l'une quelconque des revendications 1 à 5.

8. Un modèle d'apprentissage automatique de réseau neuronal entraîné et implémenté par ordinateur pour la prédiction basée sur l'image de cuboïdes associés à un objet donné, ou un support de stockage de données stockant le modèle pour la prédiction basée sur l'image de cuboïdes associés à un objet donné, tel que généré par l'une des revendications 1 à 5.

9. Utilisation du modèle d'apprentissage automatique entraîné pour la prédiction basée sur l'image de cuboïdes associés à un objet donné tel que généré par l'une des revendications 1 à 5 pour le fonctionnement d'un véhicule ou d'une plateforme mobile.

10. Un véhicule ou une plateforme mobile configurée pour être exploitée ou contrôlée au moins partiellement via le modèle d'apprentissage automatique entraîné pour la prédiction basée sur l'image de cuboïdes associés à un objet donné, dans lequel le modèle d'apprentissage automatique entraîné est généré selon l'une quelconque des revendications 1 à 5.
